# EUROPÄISCHE PATENTSCHRIFT

(11) **EP 2 465 640 B1**
(45) Veröffentlichungstag und Bekanntmachung des Hinweises auf die Patenterteilung: **29.04.2015**
(21) Anmeldenummer: 12001694.4
(22) Anmeldetag: 09.09.2008
(51) Int. Cl.: B24B 19/14, B24B 5/36, B23Q 3/157

(54) **Schleifmaschine, insbesondere Hochgeschwindigkeitsschleifmaschine**
Grinding machine, in particular high-speed grinding machine
Ponceuse, en particulier ponceuse à vitesse élévée

(30) Priorität: 17.09.2007 DE 102007044275
(43) Veröffentlichungstag der Anmeldung: 20.06.2012
(62) Teilanmeldung aus: 08015813.2
(73) Patentinhaber: REFORM Maschinenfabrik Adolf Rabenseifner GmbH & Co. KG, 36043 Fulda (DE)
(72) Erfinder: Altmann, Siegfried, Dipl.-Ing., 36100 Petersberg (DE); Armes, Jürgen, Dipl.-Ing., 36137 Großenlüder-Eichenau (DE)
(74) Vertreter: Hebing, Norbert

(56) Entgegenhaltungen:
- EP-A- 1 491 289
- DE-C1- 3 403 361
- DE-U1- 8 518 963

## Beschreibung

Die Erfindung bezieht sich auf eine Schleifmaschine, insbesondere Hochgeschwindigkeitsschleitmaschine mit einem Maschinenbett, auf dem Lagerstützen für einen aus mehreren Stufen bestehenden Turbinenrotor und ein Schleifscheibenkogf angeordnet sind, wobei der Turbinenrotor um seine Achse drehbar in den Lagerstützen gelagert ist und am Schleifscheibenkopf wenigstens eine Schleifscheibe um eine sich parallel zur Rotorachse erstreckende Spindelachse drehbar in einer Aufnahme gelagert ist, und wobei der Schleifscheibenkopf und die Lageretützen in axialer Richtung des Maschinenbettes. die durch die Rotorachse bestimmt ist, gegeneinander verstellbar sind, so dass nacheinander die Schaufeln der aufeinanderfolgenden Stufen des Turbinenrotors geschliffen werden können, wobei ein Magazin für Schleifscheiben und ein selbsttätig arbeitender Schleifscheibenwechsler vorgesehen sind.

Eine derartige Hochgeschwindigkeitsschleifmaschine ist in der EP 1 491 289 beschrieben. Um verschiedenartige Stufen bearbeiten zu können, besitzt diese Maschine einen um 180° drehbaren Schleifscheibenkopf mit zwei an gegenüberliegenden Seiten des Kopfes angeordneten Schleifscheiben, so dass je nach Stellung des Schleifscheibenkopfes jeweils eine der Schleifscheiben eine Stufe des Turbinenrotors bearbeitet. Auf diese Weise können Rotoren bearbeitet werden, bei denen Schaufeln aus zwei verschiedenen Materialien zum Einsatz kommen, wobei die Schleifscheiben in ihrer Zusammensetzung dem jeweils zu bearbeitenden Schaufelmaterial angepasst sind. Um den Rotor noch besser an die verschiedenen thermischen Belastungen in den Turbinen anpassen zu können, werden die Schaufeln, je nachdem, welcher Stufe des Rotors sie zugeordnet sind, auch aus mehr als zwei verschiedenen Materialien bzw. Legierungen gefertigt, so dass je nach Anzahl der eingesetzten Materialien zur Nachbearbeitung des Rotors eine entsprechende erhöhte Anzahl von an das jeweilige Material angepassten Schleifscheiben benötigt werden. Um dies zu realisieren, könnte daran gedacht werden, die Zahl der Schleifscheiben am Schleifscheibenkopf zu erhöhen, so dass alle Schleifscheiben, die zum Schleifen des Turbinenrotors benötigt werden, am Schleifscheibenkopf bereitgehalten werden. Dies hätte aber den Nachteil, dass sich dessen Gewicht noch weiter erhöht, so dass der selbst bei einem Zweischleifscheibenkopf schon vorliegende konstruktive Aufwand noch weiter erhöht werden müsste, um den Schleifscheibenkopf mit einer für ein genaues Schleifen benötigten ausreichend hohen Präzision positionieren zu können.

Die DE 85 18 963 91 offenbart eine Schleifmaschine, die zum Schleifen von Turbinen geeignet ist, mit einem Werkzeugwechsler. Die Schleifscheiben sind zu beiden Seiten mit einer Aufnahme versehen, wobei die Aufnahmen von gleicher Art sind. Es handelt sich jeweils um einen Zapfen mit einer umlaufende Nut, der sich innerhalb einer Vertiefung im Zentrum der Schleifscheibenhalterung befindet.

Die DE 34 03 361 C1 beschreibt eine Schleifscheibe, die auf einer Seite so ausgebildet ist, dass sie von der Spindel einer Werkzeugmaschine gehalten werden kann und auf der anderen Seite von dem Greifwerkzeug eines Werkzeugwechslers.

Die Spindelseite besteht aus einen übe die Seite der Schleifscheibe hervorstehenden Zapfen mit einer umlaufenden Nut, die von einem Greifer in der Spindel erfasst werden kann.

Die gegenüberliegende Seite besitzt eine Vertiefung, daren Mantelfläche mit einer umlaufenden Nut versehen ist, in die das Werkzeug eines Werkzeugwechslers eingreifen kann.

Die Erfindung beruht somit auf dem problem, eine Hochgeschwindigkeitsschleifmaschine zu schaffen, die in der Lage ist, eine Turbine selbsttäti mit mehr als einer Schleifscheibe hochpräzise zu bearbeiten.

Das Problem wird durch eine Schleifmaschine mit den Merkmalen des Anspruchs 1 gelöst.

Zur Lösung des Problems sieht die Erfindung vor, dass jede Schleifscheibe an ihrer einen Stirnseite ein Kupplungsstück einer ersten Art aufweiset, das mit einem entsprechenden Gegenstück in den Aufnahmen am Schleifscheibenkopf und Magazinträger zusammenwirkt, und an ihrer anderen Stirnseite ein Kupplungsstück einer zweiten Art aufweist, das mit den Aufnahmen am Schleifscheibenwechsler zusammenwirkt.

Das Kupplungsstück der ersten Art weist einen langen Konus auf, der eine präzise und zentrische Führung und Halt im Schleifscheibenkopf ermöglicht.

Hinsichtlich der Kupplung der zweiten Art ist zu berücksichtigen, dass die Schleifscheibe am Schleifscheibenkopf von einer Schutzhaube weitgehend gekapselt ist, was ein Absaugen des Schleifstaubes ermöglicht. Eine Wand dieser schutzhaube liegt eng an der freien Seite der Schleifscheibe an. Um den beschränkten Platzverhältnissen Rechnung zur tragen, ist erfindundsgemäß vorgesehen, dass das Kupplungsstück der zweiten Art aus einem in eine stirnseitige Vertiefung des Schleifscheibenkerns einzusetzenden Ring besteht, wobei die Ringachse in der Schleifscheibenachse liegt und wobei der von der Stirnseite abstehende Rand des Ringes einen radial nach innen weisenden Kragen aufweist.

Dazu besteht das Gegenstück in der Aufnahme am Schleifscheibenwechsler aus einer ringartigen Vertiefung zur Aufnehme des Ringes, wobei am Innenrand der Vertiefung Klemmelemente vorgesehen sind, die mittels einer Betätigung radial nach außen bewegbar sind, um den Kragen an einem eingesetzten Ring zu hintergreifen und so die Kupplung zu schließen.

Die Betätigung der Klemmelemente in eine die Kupplung schließende Position erfolgt mittels einer aus Federn bestehenden Spannvorrichtung und in eine die Kupplung lösende Postition mittels einer hydraulisch oder pneumatisch wirkenden Stelleinrichtung. Auf diese Weise ist sichergestellt, dass die Kupplung mechanisch geschlossen ist und eine von der Kupplung gehaltene Schleifscheibe auch bei Ausfall der elektrischen oder pneumatischen Versorgung des Schleifscheibenwechslers sich nicht aus der Kupplung löst.

Der Schleifscheibenkopf besitzt dabei nur eine oder ggf. auch mehrere Aufnahmen für Schleifscheiben, so dass sein Gewicht möglichst gering ist und er noch mit einem geringen konstruktiven Aufwand hochpräzise geführt werden kann. Die Zahl der Aufnahmen ist dabei jedenfalls geringer als die Zahl der zur Rotorbearbeitung benötigten Schleifscheiben. Je nach Bedarf werden daher die Schleifscheiben mit Hilfe des Schleifscheibenwechslers ausgetauscht. Da dieser selbsttätig arbeitet, kann mit einer entsprechenden Steuerung der Schleifvorgang für sämtliche Stufen des Rotors programmiert werden.

Am Schleifscheibenkopf befinden sich damit ein oder mehrere Aufnahmen für Schleifscheiben, die mit Schleifscheiben ggf. unter Austausch der am Schleifscheibenkopf vorhandenen Schleifscheiben aus einem Magazin bestückt werden.

Vorzugsweise ist der Schleifscheibenwechsler auf einem Linearschlitten angeordnet, der in axialer Richtung verfahrbar ist. Die Führung des Linearschlittens verläuft dabei parallel zum Maschinenbett, so dass ein kurzer Weg zwischen dem Schleifscheibenkopf und dem Magazin realisiert werden kann.

Um den Wechselvorgang zeitlich optimieren zu können, besitzt der Schleifscheibenwechsler zwei oder mehr, vorzugsweise aber zwei Aufnahmen, die verteilt bzw. gegenüberliegend auf einer Plattform angeordnet sind, die um eine Hochachse drehbar auf dem Schlitten gehalten ist. Damit kann von der einen Aufnahme eine Schleifscheibe aus dem Magazin und von der anderen Aufnahme eine Schleifscheibe vom Schleifscheibenkopf aufgenommen werden, wobei diese von der Schleifscheibe aus dem Magazin ersetzt wird, bevor sie selbst im Magazin abgelegt wird.

Vorzugsweise ist das Magazin an der Stirnseite des Maschinenbettes angeordnet und weist in einem drehbaren Träger mehrere Aufnahmen für die Schleifscheiben auf, die in einer vertikal und senkrecht zur axialer Richtung ausgerichteten Ebene angeordnet sind. Diese Anordnung ermöglicht kurze Wege und damit einen schnell auszuführenden Wechsel.

Im Folgenden soll anhand eines Ausführungsbeispiels die Erfindung näher erläutert werden. Dazu zeigen:
- Fig. 1: eine Seitenansicht auf eine erfindungsgemäße Hochgeschwindigkeitsschleifmaschine,
- Fig. 2: eine Draufsicht auf eine Hochgeschwindigkeitsschleifmaschine gemäß Fig. 1,
- Fig. 3: eine Frontalansicht auf ein Magazin mit vier magazinierten Schleifscheiben,
- Fig. 4: einen Querschnitt durch eine Schleifscheibe und
- Fig. 5: einen Querschnitt durch eine Schleifscheibenaufnahme am Schleifscheibenwechsler.

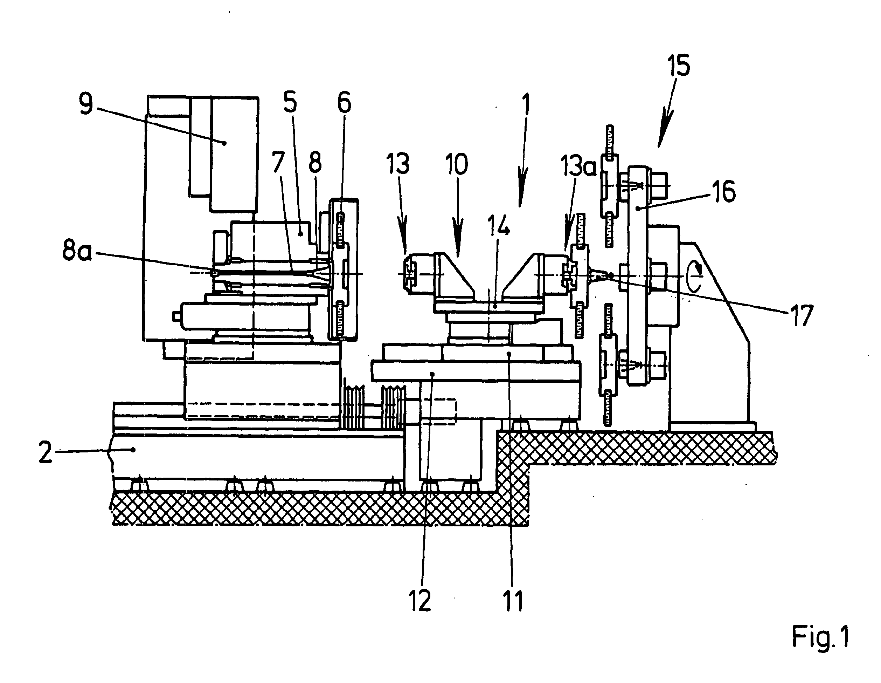

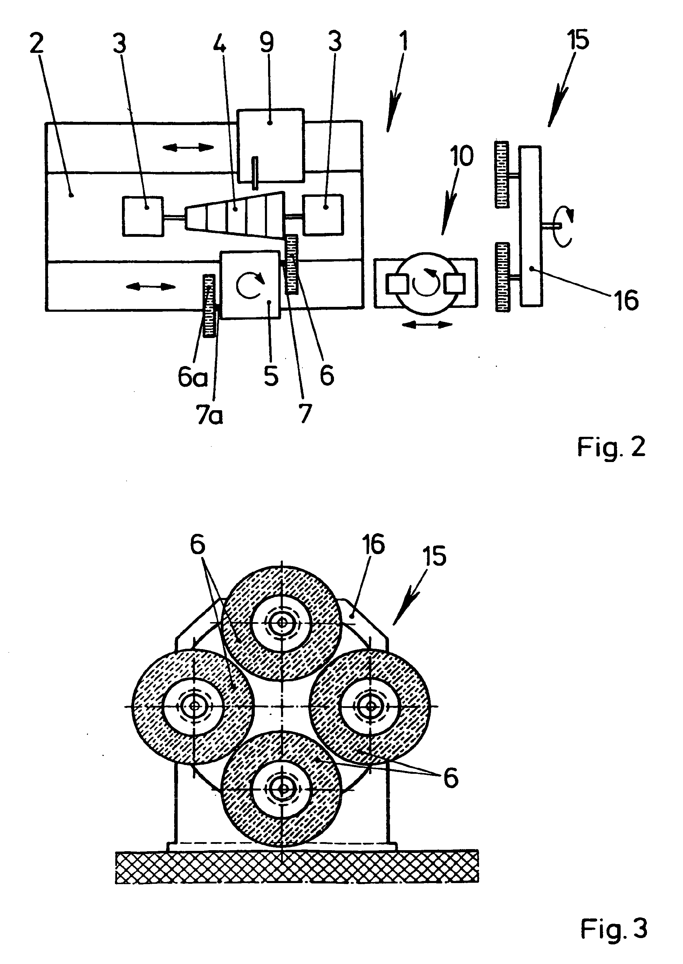

Es wird zunächst auf die Fig. 1 und 2 Bezug genommen. Diese zeigen eine Hochgeschwindigkeitsschleifmaschine 1 mit einem Maschinenbett 2, auf dem sich Lagerstützen 3 für einen aus mehreren Stufen bestehenden Turbinenrotor 4 befinden. Der Turbinenrotor 4 ist um seine Achse drehbar in den Lagerstützen 3 gelagert, wobei die Achse des Turbinenrotors 4 die Längsachse der Schleifmaschine 1 bestimmt. Auf der einen Längsseite des Turbinenrotors 4 befindet sich ein Schleifscheibenkopf 5, an dem zwei Schleifscheiben 6, 6a um jeweils eine sich parallel zur Rotorachse erstreckende Spindelachse 7, 7a drehbar in einer Aufnahme 8, 8a gelagert sind. Der Schleifscheibenkopf 5 kann im Bezug zu den Lagerstützen 3 in axialer und radialer Richtung verfahren werden, so dass nacheinander die Schaufeln der aufeinanderfolgenden Stufen des Turbinenrotors 4 geschliffen werden können. Auf der anderen Seite des Turbinenrotors befindet sich eine Lasermessvorrichtung 9 zur Bestimmung des Schleiffortschrittes.

Ein Schleifscheibenwechsler 10 ist seitlich zur Achse des Turbinenrotors 4 vor dem Schleifscheibenkopf 5 auf einem Linearschlitten 11 angeordnet, der auf Schienen 12 in axialer Richtung verfahrbar ist. Die Schienen 12 sind in einer Verlängerung zur Führung für den Schleifscheibenkopf 5 und parallel zur Achse des Turbinenrotors 4 angeordnet.

Der Schleifscheibenwechsler 10 selbst besteht aus zwei gegenüberliegenden und radial nach außen weisenden Aufnahmen 13, 13a, die auf einer Plattform 14 angeordnet sind, die um eine Hochachse drehbar auf dem Linearschlitten 11 gelagert ist.

Ein Magazin 15 für Schleifscheiben ist an der Stirnseite des Maschinenbettes 2 angeordnet. Das Magazin 15 besteht gemäß Fig. 3 aus einem um eine horizontale Achse drehbaren Magazinträger 16 für drei, vier oder auch mehr Schleifscheiben. Der Magazinträger 16 wird jeweils in eine Position gedreht, so dass eine einzuwechselnde Schleifscheibe vor einer Aufnahme 13, 13a des Schleifscheibenwechslers 10 zu liegen kommt. Indem der Schleifscheibenwechsler 10 radial in Richtung des Magazinträgers verfahren wird, kann eine der Aufnahmen 13, 13a mit der Schleifscheibe gekoppelt werden. Durch eine Drehung der Plattform 14 um 180° wird die aufgenommene Schleifscheibe vor die Aufnahme 8 bzw. 8a des Schleifscheibenkopfes 5 gebracht und kann mit dieser koppeln, indem der Linearschlitten 11 axial in Richtung des Schleifscheibenkopfes 5 verfahren wird. Sollte die Plattform mit mehr als zwei Aufnahmen versehen sein oder das Magazin nicht gegenüberliegend zum Schleifscheibenkopf liegen, ist der Drehwinkel der Plattform entsprechend anzupassen und kann auch bei mehr oder weniger als 180° liegen.

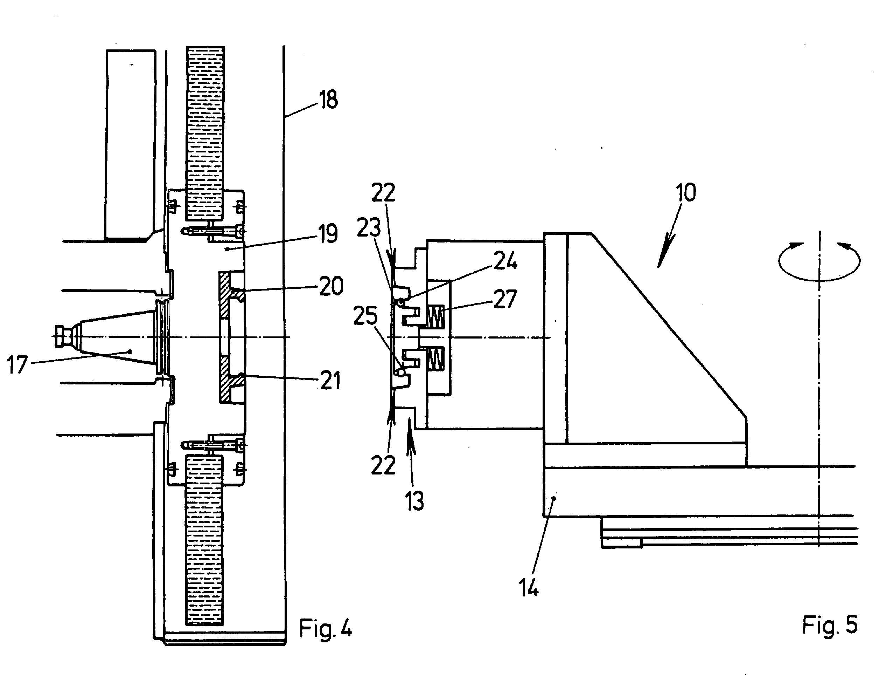

Gemäß Fig. 4 besitzt jede Schleifscheibe 6 an ihrer einen Stirnseite ein Kupplungsstück 17 einer ersten Art, die mit den Aufnahmen 8, 8a am Schleifscheibenkopf 5 und am Magazinträger 16 zusammenwirkt. Bei den Kupplungsstücken 17 der ersten Art handelt es sich um genormte Steilkegel oder Hohlschaftkegel, die in entsprechende konusförmige Vertiefungen in den Aufnahmen 8, 8a am Schleifscheibenkopf 5 und am Magazinträger 16 eingesteckt werden und dort von einer Klammer ergriffen und gehalten werden. Diese Art der Kupplung ist dem Fachmann bekannt und braucht daher nicht näher beschrieben zu werden.

Diese Art von Kupplungsstücken ist aber für die Kupplung mit dem Schleifscheibenwechsler 10 nicht geeignet, da sie wegen der Höhe der Kegel von der Stirnfläche der Schleifscheiben abstehen. Der Schleifscheibenkopf 5 ist aber mit einer Schutzhaube 18 versehen, die, um Saugverluste zu vermeiden, relativ eng an der Stirnseite der Schleifscheibe angeordnet ist. Der Abstand zwischen der Stirnseite und der Schutzhaube 18 ist zumindest kleiner als die übliche Höhe von Steil- oder Hohlschaftkegeln, wie sie zur Verbindung mit der Spindel des Schleifscheibenkopfes 5 eingesetzt werden.

Zur Kupplung mit dem Schleifscheibenwechsler 10 wird daher ein Kupplungsstück einer zweiten Art eingesetzt, das aus einem in eine stirnseitige Vertiefung des Schleifscheibenkerns 19 einzulegenden Ring 20 besteht, wobei die Ringachse in der Schleifscheibenachse liegt und wobei der von der Stirnseite abstehende Rand des Ringes 20 einen radial nach innen weisenden Kragen 21 aufweist.

Fig. 5 zeigt das Gegenstück in der Aufnahme 13 am Schleifscheibenwechsler 10. Dieser besteht aus einer ringartigen Vertiefung 22 zur Aufnahme des Ringes 20, wobei in einem Steg 23 am Innenrand der Vertiefung 22 Klemmelemente 24 in Form von Kugeln vorgesehen sind, die mittels einer Rampe 25 an einer zentralen Betätigung 26 radial nach außen bewegt werden, um den Kragen 21 von einem in die Vertiefung 22 eingesetzten Ring 20 zu hintergreifen und so die Kupplung zu schließen.

Die Betätigung 26 wird von einer aus einem Tellerfederpaket bestehenden Spannvorrichtung 27 in einer die Kupplung schließenden Position gehalten. Zur Lösung der Kupplung wird mittels einer hier nicht näher gezeigten hydraulischen oder pneumatisch wirkenden Stelleinrichtung die Betätigung 26 in eine die Kupplung lösende Position gebracht, das heißt, dass die Betätigung 26 nach außen bewegt wird und die Rampe 25 die Klemmelemente 24 freigibt, so dass diese radial nach innen gleiten können.

Um eine Schleifscheibe 6 in eine der Aufnahmen 8, 8a einsetzen zu können, besitzt die Schutzhaube 18 auf der von der jeweiligen Aufnahme 8, 8a entfernten Seite eine entfernbare Seitenwand, die z. B. in Form eines Schiebers ausgeführt ist. Zum Einsetzen einer Schleifscheibe 6 wird der Schieber motorisch zur Seite geschoben, so dass die Aufnahme 8 bzw. 8a freiliegt und die Schleifscheibe eingesetzt werden kann. Sobald dies geschehen ist und der Schleifscheibenwechsler sich zurückgezogen hat, wird der Schieber zurückgeschoben, so dass die Schutzhaube 18 wieder geschlossen ist.

### Bezugszeichenliste

- 1: Hochgeschwindigkeitsschleifmaschine
- 2: Maschinenbett
- 3: Lagerstützen
- 4: Turbinenrotor
- 5: Schleifscheibenkopf

- 6: Schleifscheibe
- 7: Spindelachse
- 8: Aufnahme
- 9: Lasermessvorrichtung
- 10: Schleifscheibenwechsler

- 11: Linearschlitten
- 12: Schienen
- 13: Aufnahmen
- 14: Plattform
- 15: Magazin

- 16: Träger
- 17: Kupplungsstück
- 18: Schutzhaube
- 19: Schleifscheibenkern
- 20: Ring

- 21: Kragen

- 22: Vertiefung
- 23: Steg
- 24: Klemmelemente
- 25: Rampe

- 26: Betätigung
- 27: Spannvorrichtung
- 28:
- 29:
- 30:

- 31:
- 32:
- 33:
- 34:
- 35:

- 36:
- 37:
- 38:
- 39:
- 40:

## Patentansprüche

1. Schleifmaschine, insbesondere Hochgeschwindigkeits, schleifmaschine mit einem Maschinenbett (2), auf dem Lagerstützen (3) für einen aus mehreren Stufen bestehenden Turbinenrotor (4) und ein Schleifscheibenkopf (5) angeordnet sind, wobei der Turbinenrotor (4) um seine Achse drehbar in den Lagerstützen (3) gelagert ist und am Schleifscheibenkopf (5) wenigstens eine Schleifscheibe (6) um eine sich parallel zur Rotorachse erstreckende Spindelachse drehbar in einer Aufnahme (8, 8a) gelagert ist, und wobei der Schleifscheibenkopf (5) und die Lagerstützen (3) in axialer Richtung des Maschinenbettes (2), die durch die Rotorachse bestimmt ist, gegeneinander verstellbar sind, so dass nacheinander die Schaufeln der aufeinanderfolgenden Stufen des Turbinenrotors (4) geschliffen werden können, wobei ein Magazin (15) für Schleifscheiben (6) und ein selbsttätig arbeitender Schleifscheibenwechsler (10) vorgesehen sind, **dadurch gekennzeichnet,**
**dass** jede Schleifscheibe (6) an ihrer einen Stirnseite ein Kupplungsstück (17) einer ersten Art aufweist, das mit einem entsprechenden Gegenstück in den Aufnahmen (8, 8a) am Schleifscheibenkopf (5) und Magazinträger (16) zusammenwirkt, und an ihrer anderen Stirnseite ein Kupplungsstück einer zweiten Art aufweist, das mit den Aufnahmen (13) am Schleifscheibenwechsler (10) zusammenwirkt, wobei das Kupplungsstück der zweiten Art aus einem in eine stirnseitige Vertiefung (22) des Schleifscheibenkerns (19) einzusetzenden Ring (20) besteht, wobei die Ringachse in der Schleifscheibenachse liegt und wobei der von der Stirnseite abstehende Rand des Ringes (20) einen radial nach innen weisenden Kragen (21) aufweist,
**dass** das Gegenstück in der Aufnahme (13) am Schleifscheibenwechsler (10) aus einer ringartigen Vertiefung (22) zur Aufnahme des Ringes (20) besteht, wobei am Innenrand der Vertiefung Klemmelemente (24) vorgesehen sind, die mittels einer Betätigung (26) radial nach außen bewegbar sind, um den Kragen (21) an einem eingesetzten Ring zu hintergreifen und so die Kupplung zu schließen, und dass die Betätigung (26) mittels einer aus Federn bestehenden Spannvorrichtung (27) in eine die Kupplung schließende Position und mittels einer hydraulisch oder pneumatisch wirkenden Stelleinrichtung in eine die Kupplung lösende Position bringbar ist.

2. Schleifmaschine nach Anspruch 1, **dadurch gekennzeichnet, dass** der Schleifscheibenwechsler (10) auf einem Linearschlitten (11) angeordnet ist, der in axialer Richtung verfahrbar ist.

3. Schleifmaschine nach Anspruch 2, **dadurch gekennzeichnet, dass** der Schleifscheibenwechsler (10) zwei oder mehr Aufnahmen (13, 13a) aufweist, die verteilt auf einer Plattform (14) angeordnet sind, die um eine Hochachse drehbar auf dem Linearschlitten (11) gelagert ist.

4. Schleifmaschine nach Anspruch 3, **dadurch gekennzeichnet, dass** das Magazin (15) an der Stirnseite des Maschinenbettes (2) angeordnet ist und in einem drehbaren Magazinträger (16) mehrere Aufnahmen für die Schleifscheiben (6) aufweist, die in einer vertikal und senkrecht zur axialen Richtung ausgerichteten Ebene angeordnet sind.

## Claims

1. A grinding machine, in particular high-speed grinding machine, comprising a machine bed (2) on which bearing supports (3) for a turbine rotor (4) consisting of a plurality of stages and a grinding disk head (5) are arranged, wherein the turbine rotor (4) is rotatable about its axis and mounted in the mounting supports (3), and at the grinding disk head (5), at least one grinding disk (6) is mounted in a receptacle (8, 8a) and is rotatable about a spindle axis extending parallel to the rotor axis, and wherein the grinding disk head (5) and the bearing supports (3) are displaceable relative to one another in the axial direction of the machine bed (2), which is determined by the rotor axis, so that the blades of the successive stages of the turbine rotor (4) can be successively ground, wherein a magazine (15) for grinding disks (6) and an automatically operating grinding disk changer (10) are provided,
**characterized in that** each grinding disk (5) has on its one front side a coupling piece (17) of a first kind which interacts with a corresponding counter piece in the receptacles (8, 8a) on the grinding disk head (5) and the magazine carrier (16), and on its other front side has a coupling piece of a second kind which interacts with the receptacles (13) on the grinding disk changer (10), whereby the coupling piece of the second kind consists of a ring (20) to be inserted in a recess (22) on the front side of the grinding disk core (19), wherein the ring axis lies in the grinding disk axis and wherein the ring's (20) rim projecting from the front side has a radially inward pointing collar (21),
that the counter piece in the receptacle (13) at the grinding disk changer (10) consists of a ring-like recess (22) for receiving the ring (20), wherein on the inner edge of the recess, clamping elements (24) are provided which, by means of an actuating mechanism (26), are movable radially outward in order to engage behind the collar (21) at an inserted ring and to close the coupling in this manner,
and that the actuating mechanism (26) can be brought by means of a clamping device (27) consisting of springs into a position closing the coupling, and by means of a hydraulically or pneumatically acting control element can be brought into a position releasing the coupling.

2. The grinding machine according to claim 1, **characterized in that** the grinding disk changer (10) is arranged on a linear slide (11) which is displaceable in the axial direction.

3. The grinding machine according to claim 2, **characterized in that** the grinding disk changer (10) has two or more receptacles (13, 13a) which are arranged distributed on a platform (14) which is mounted on the linear slide (11) to be rotatable about a vertical axis.

4. The grinding machine according to claim 3, **characterized in that** the magazine (15) is arranged on the front side of the machine bed (2) and has in a rotatable magazine carrier (16) a plurality of receptacles for the grinding disks (6) which are located and are arranged in a plane aligned vertically and perpendicularly to the axial direction.

## Revendications

1. Ponceuse, en particulier ponceuse à vitesse élevée comprenant un socle de machine (2), sur lequel sont disposés des supports de palier (3) pour un rotor de turbine (4) comprenant plusieurs niveaux et une tête de meule (5), le rotor de turbine (4) étant monté dans les supports de palier (3) de façon à pouvoir tourner autour de son axe et au moins une meule (6) étant montée sur la tête de meule (5) dans un logement (8, 8a) de façon à pouvoir tourner autour d'un axe de broche s'étendant parallèlement à l'axe du rotor et la tête de meule (5) et les supports de palier (3) étant préglables les uns par rapport aux autres dans la direction axiale du socle de machine (2), qui est déterminée par l'axe du rotor, de sorte que de façon successive les ailettes des niveaux consécutifs du rotor de turbine (4) peuvent être poncées de façon successive, un magasin (15) pour des meules (6) et un changeur de meule (10) travaillant de façon automatique étant prévus, **caractérisée en ce que**
chaque meule (6) présente sur l'un de ses côtés avant une pièce d'accouplement (17) d'un premier type, qui coopère avec une pièce inverse correspondante dans les logements (8, 8a) sur la tête de meule (5) et le support de magasin (16), et présente sur son autre côté avant une pièce d'accouplement d'un second type, qui coopère avec les logements (13) sur le changeur de meule (10), la pièce d'accouplement du second type comprenant une bague (20) à insérer dans une cavité (22) côté avant du noyau de meule (19), l'axe d'anneau étant situé dans l'axe de meule et le bord, débordant du côté avant, de la bague (20) présentant une collerette dirigée radialement (21) dirigée vers l'intérieur,
**caractérisée en ce que** la pièce inverse dans le logement (13) sur le changeur de meule (10) comprend une cavité de type annulaire (22) pour le logement de la bague (20), des éléments de serrage (24) étant prévus sur le bord interne de la cavité, lesquels éléments peuvent être déplacés au moyen d'un actionnement (26) radialement vers l'extérieur, afin de saisir à l'arrière la collerette (21) sur une bague insérée et de fermer ainsi l'accouplement, et
**caractérisée en ce que** l'actionnement (26) peut être amené au moyen d'un dispositif de serrage (27) comprenant des ressorts dans une position fermant l'accouplement et au moyen d'un système hydraulique du dispositif de réglage agissant de façon pneumatique dans une position déclenchant l'accouplement.

2. Ponceuse selon la revendication 1, **caractérisée en ce que** le changeur de meule (10) est disposé sur un coulisseau linéaire (11), lequel peut être déplacé dans la direction axiale.

3. Ponceuse selon la revendication 2, **caractérisée en ce que** le changeur de meule (10) présente deux ou plus de deux logements (13, 13a), qui sont disposés de façon répartie sur une plateforme (14), laquelle est montée sur le coulisseau linéaire (11) de façon à pouvoir tourner autour d'un axe vertical.

4. Ponceuse selon la revendication 3, **caractérisée en ce que** le magasin (15) est disposé sur le côté avant du socle de machine (2) et présente plusieurs logements pour les meules (6) dans un support de magasin (16) rotatif, lesquels logements sont disposés dans un plan orienté verticalement et perpendiculairement à la direction axiale.
